# EUROPEAN PATENT SPECIFICATION

(11) **EP 3 956 595 B1**
(45) Date of publication and mention of the grant of the patent: **25.01.2023**
(21) Application number: 19748774.7
(22) Date of filing: 25.07.2019
(51) Int. Cl.: F16L 37/086, F16L 37/098, F16L 33/22

(54) **COUPLING SLEEVE FOR A QUICK-ACTING HOSE COUPLING**
KUPPLUNGSHÜLSE FÜR EINE SCHNELLVERSCHLUSSSCHLAUCHKUPPLUNG
MANCHON D'ACCOUPLEMENT POUR RACCORD DE TUYAU À ACTION RAPIDE

(30) Priority: 18.04.2019 DE 102019002830
(43) Date of publication of application: 23.02.2022
(73) Proprietor: Husqvarna AB, 56182 Huskvarna (SE)
(72) Inventor: RENNER, Thomas, 89079 Ulm (DE)
(74) Representative: Finkele, Rolf
(86) International application number: PCT/EP2019/070132
(87) International publication number: WO 2020/211964

(56) References cited:
- DE-A1- 2 734 117
- US-A- 4 681 350
- US-A- 4 903 942

## Description

### TECHNICAL FIELD

The present disclosure relates to a coupling sleeve for a hose coupling. More specifically, the present disclosure relates to an elastomer-based coupling sleeve which overcomes major demerits, such as for applications with indoor taps.

### BACKGROUND

Conventional hose couplers generally make use of a means to allow coupling of the hose connector with another connector associated with a water source say a tap. The hose connectors comprise a movable coupling sleeve that control the engagement and disengagement of locking elements that look the hose connector to the connector associated with the water source. In many cases, a stainless steel spring is used as the means to hold a ring of the coupling sleeve in its final position, however, this leads to an undesirable operation because of various reasons. Firstly, this increases cost of the hose coupling substantially. Further, due to the metal-plastic mix there is limited potential of recycling of the hose coupling.

There have been efforts in the past to address such issues. As such the patent document US 4 903 942 describes a coupling sleeve with a hose connector that has locking elements integrally formed with the hose connector's body that allow the coupling of the hose connector to another connector associated to a water source. The locking elements are formed on the coupling sleeve that in there relaxed position they pass through slots in the body of the hose connector to couple to the connector associated with the water source. To uncouple it, the sleeve has to be moved causing the locking elements to move their positional relation to the slots. This movement generates sort of spring force on the locking elements that due to the integral formation also acts onto the coupling sleeve and thus move it back to its original position. Thus the so constructed coupling ring is not of need for an additional, separate spring to assist the movement.

DE 27 34 117 A1 discloses a coupling sleeve according to the preamble of claim 1.

### SUMMARY

In view of the above, it is an objective of the present invention to solve or at least reduce the drawbacks discussed above. The objective is at least partially achieved by a coupling sleeve for a quick-acting hose coupling having a base body, the coupling sleeve being as defined in claim 1.

The coupling sleeve is fixed onto the base body, with the base body having at least one opening defining a slot through which at least part of a locking element is able to pass. The coupling sleeve is adapted to move between an engaged position and a disengaged position relative to the base body of the hose coupling. In the engaged position at least part of the locking element is held in a position where at least part of it is passed through the slot defined by the base body; and in the disengaged position at least part of the locking element moves its positional relation to the slot.

The coupling sleeve further includes at least one elastomeric, rubber like element adapted to bias the coupling sleeve in the engaged position. Thus, the present disclosure provides a simple, convenient, and efficient coupling sleeve relying on elastomeric properties to provide desired benefits in applications of the hose coupling.

According to an embodiment of the present invention, the at least one elastomeric element is manufactured using a 2-component (2K) injection molding process. Choice of the molding process material for the elastomeric element may depend on application dynamics and other factors based on the coupling sleeve.

According to an embodiment of the present invention, the coupling sleeve exhibits the base body of a relatively hard plastics material on an inner side and an auxiliary element of a flexible elastomeric, rubber-like material on an outer side of the coupling sleeve. This may allow better ergonomic and handling convenience for a user engaging with the rubber-like material of the auxiliary element.

According to an embodiment of the present invention, the auxiliary element is on the outer side of the coupling sleeve and the at least one elastomeric element is on the inner side of the coupling sleeve. Further, the auxiliary element and the at least one elastomeric element are manufactured using a 2-component or multi-component injection molding process.

According to an embodiment of the present invention, the auxiliary element and the at least one elastomeric element are coupled via a channel within the coupling sleeve and are thus manufactured in a single processing step. Role of the elastomeric element is crucial for a safe and risk-free operation of the connector assembly, and their number/material/dimensions will also generally depend on such safety factors among others.

According to an embodiment of the present invention, a hose connector can include a coupling sleeve as mentioned in different embodiments of the present disclosure.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a front view of a conventional hose coupling;
**FIG. 2** shows a front partial cross-sectional view of the conventional hose coupling of **FIG. 1**;
**FIG. 3** shows a front partial cross-sectional view of a hose coupling along with a coupling sleeve before engagement, in accordance with an embodiment of the present invention;
**FIG. 4** shows a front perspective view of the coupling sleeve, in accordance with an embodiment of the present invention;
**FIG. 5** shows a front partial cross-sectional view of the hose coupling when the coupling sleeve is being engaged, in accordance with an embodiment of the present invention; and
**FIG. 6** shows front partial cross-sectional views of the hose coupling when the coupling sleeve is partially engaged and in an engaged position, in accordance with an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

In the drawings and specification, there have been disclosed preferred embodiments and examples of the invention and, although specific terms are employed, they are used in a generic and descriptive sense only and not for the purpose of limitation of the scope of the invention being set forth in the following claims.

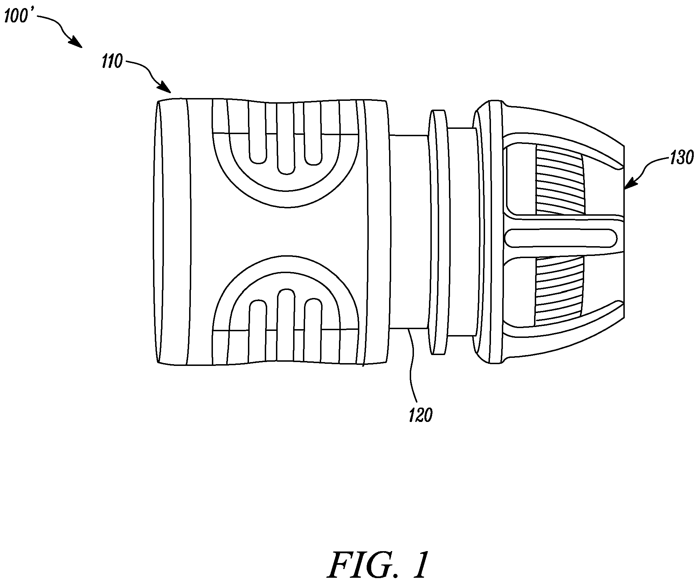

**FIG. 1** illustrates a conventional hose coupling **100**' for connecting a hose (not shown) to a water tap (not shown). The conventional hose coupling **100**' is attached to the water tap, the present disclosure can be readily implemented with any indoor/outdoor water tap although the present disclosure is not to be limited by the water tap in any manner. The hose can be any universal pipe as used or known in the art. Further, the hose may be generally connected to a connecting tool such as a sprayer, although other connecting tools have been contemplated and are well within the scope of the present disclosure.

As used herein, the conventional hose coupling **100**' is generally a cylindrical-shaped component with two-ends for input and output of a fluid, generally water. Other shape variations of the conventional hose coupling **100**' are possible and contemplated, however, the present disclosure has a preference for the cylindrical-shape due to aesthetic and ergonomic considerations.

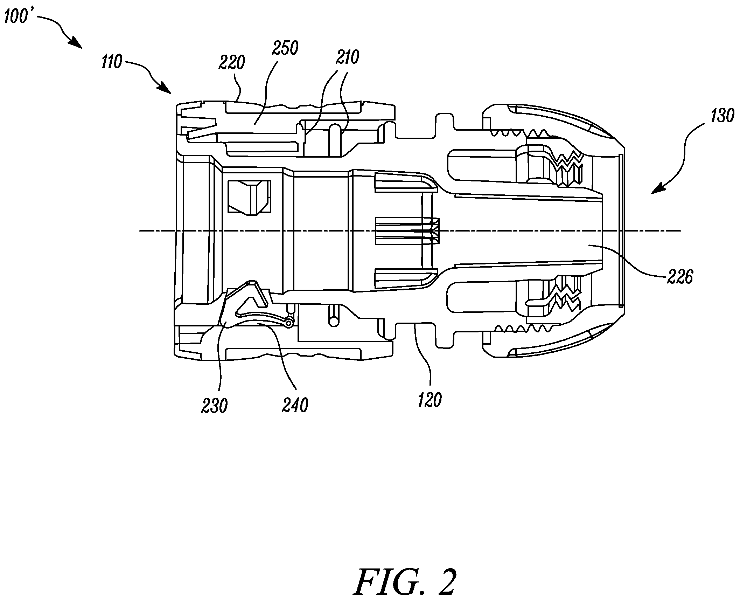

The conventional hose coupling **100**' includes a base body **120** adapted to receive an adapter element (not shown) which is generally used for connection to the water tap. Further, the base body **120**, is in turn, received by a coupling sleeve **110**. The coupling sleeve **110** is provided concentrically around the base body **120** such that the coupling sleeve **110** and the base body **120** define an annular space (around a biasing member **210** as shown in **FIG. 2**) in between. The coupling sleeve **110** is adapted to slide between an engaged position and a disengaged position. Further, the base body **120** may have threads (not shown) to threadably engage a nut **130** for assembling the hose. The base body **120** further has a water outlet 226 to concentrically engage the hose, and then the nut **130** may be securely threaded with the base body **120** over the hose.

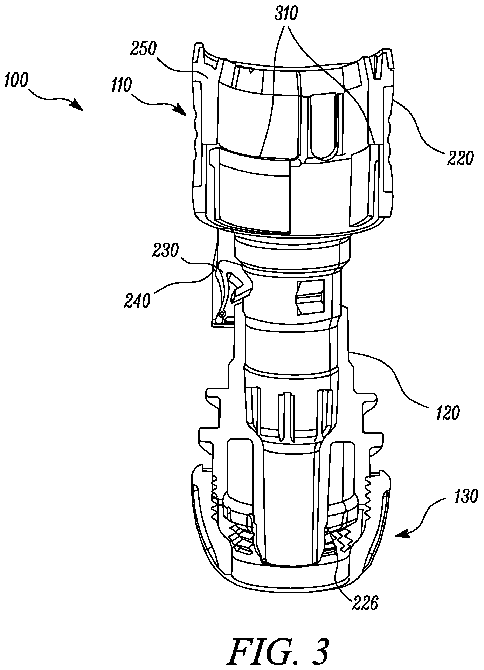

**FIG. 2** illustrates the conventional hose coupling **100**', in accordance with an embodiment of the present invention. The conventional hose coupling **100**' includes the biasing member **210** (generally stainless steel springs) provided in the annular space between the base body **120** and the coupling sleeve **110**. The biasing member **210** biases the coupling sleeve **110** in the engaged position such that at least one slot **240** receives at least one locking element **230** and retains the coupling sleeve **110** as well as the adapter. Moreover, the at least one locking element **230** is adapted to disengage with the at least one slot **240** when the coupling sleeve **110** is in the disengaged position (refer **FIG. 3**).

The biasing member **210** can be selected from one or more of a spring, elastomer, and a damper. The choice of the biasing member **210** will be dependent upon a multitude of factors such as, but need not necessarily, liquid (water) flow requirements, type or size or life of the conventional hose coupling **100**', water tap or water hose. As will be appreciated by a person having knowledge in the art, the biasing member **210** may, at times, allow the coupling sleeve **110** to disassemble even in case of any small external force disturbing the coupling sleeve **110**. Such instances may lead to inadvertent disassembly of the coupling sleeve **110**, which is a concern in case of the conventional hose coupling **100**' which make application of the biasing member **210**.

**FIG. 3** illustrates a hose coupling **100** along with the coupling sleeve **110** before engagement, in accordance with an embodiment of the present invention. The coupling sleeve **110** has a base body **250** on an inner side and an auxiliary element **220** on an outer side. The coupling sleeve **110** of the present disclosure further includes at least one elastomeric, rubber like element **310** adapted to bias the coupling sleeve **110** in the engaged position. The elastomeric, rubber like element **310** are generally flat rectangular elements, although other shapes/size/dimensions have been contemplated and well within the scope, and remain as such in a free state for the disengaged state of the coupling sleeve **110**. According to an embodiment of the present invention, the at least one elastomeric element **310** may be manufactured using a 2-component (2K) injection molding process. Choice of the molding process material for the elastomeric component may depend on application dynamics and other factors based on the coupling sleeve **110**. In in alternative embodiment the at least on element **310** might be fixed onto the coupling sleeve **110** by gluing, soldering or any other fastening method.

In some embodiments, the coupling sleeve **110** may exhibit the base body **250** of a relatively hard plastics material on the inner side and the auxiliary element **220** of a flexible rubber-like material on the outer side of the coupling sleeve **110**. This may allow better ergonomic and handling convenience for a user engaging due to benefit of the rubber-like material of the auxiliary element **220** during processes such as assembly/disassembly of the coupling sleeve **110**.

In an embodiment, the base body **120** is made up of a flexible material such that the base body **120** is reversibly angled. This takes prominence for cases where the hose is more prone to kink or bend-forming as could be expected for hoses of longer lengths. Further, flexibility of the base body **120** allows convenience for fitting the hose with the base body **120** in a user-friendly manner. Likewise, the coupling sleeve **110** can be made of any rigid or flexible such as, but not limited to, plastic, polymers, metals, as used or known in the art without departing from the scope of the present disclosure.

In some embodiment, the at least one slot **240** can include three slots **240**. Number of the slots **240** may be decided while taking into account different factors related to one or more of the hose coupling **100**, liquid flow requirements, operating life etc. Likewise, from symmetry and safety considerations, the at least one locking element **230** can include three slots **240**. However, the present disclosure is not to be limited by the slot(s) **240** and locking element(s) **230** of the hose coupling **100** in any manner.

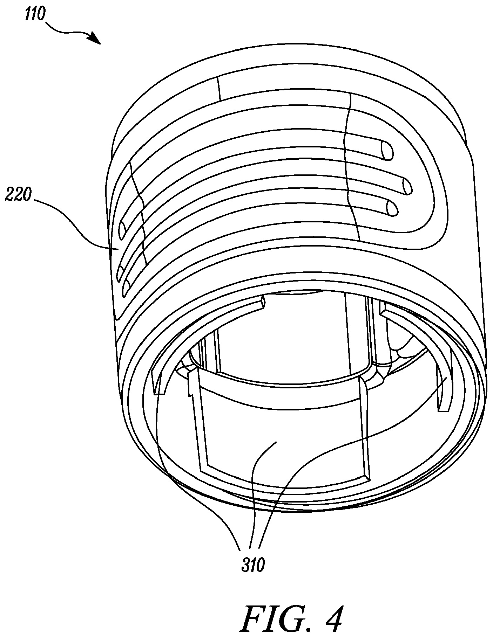

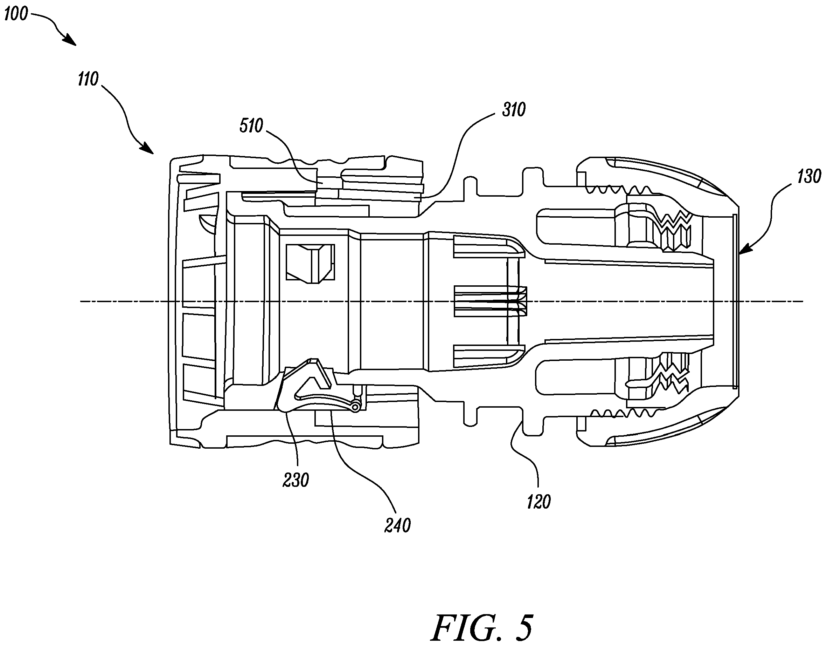

**FIG. 4** illustrates the coupling sleeve **110**, while **FIG. 5** shows the hose coupling **100** when the coupling sleeve **110** is being engaged, in accordance with an embodiment of the present invention. As will be appreciated by the present figures, the coupling sleeve **110** is adapted to move between the engaged position and the disengaged position relative to the base body **120** of the hose coupling **100**. Also, in the disengaged position the locking element **230** gets disengaged with the slot **240** defined by the base body **120** allowing easy removal of the coupling sleeve **110**. Further, these figures illustrate how the conventional hose coupling **100**' may be converted to the hose coupling **100** of the present disclosure by first, removal of the coupling sleeve **110** from the conventional hose coupling **100**', and then replacement of the biasing member **210**, where role of the biasing member **210** is performed by the elastomeric element **310** of the coupling sleeve **110**.

As illustrated in **FIG. 5**, the auxiliary element **220** is on the outer side of the coupling sleeve **110** and the at least one elastomeric element **310** is on the inner side of the coupling sleeve **110**. Further, the present disclosure shows two number of the auxiliary element **220** but actual implementations may have more or less numbers of the auxiliary element **220**. According to an embodiment of the present invention, the auxiliary element **220** and the at least one elastomeric element **310** are manufactured using a 2-component or multi-component injection molding process.

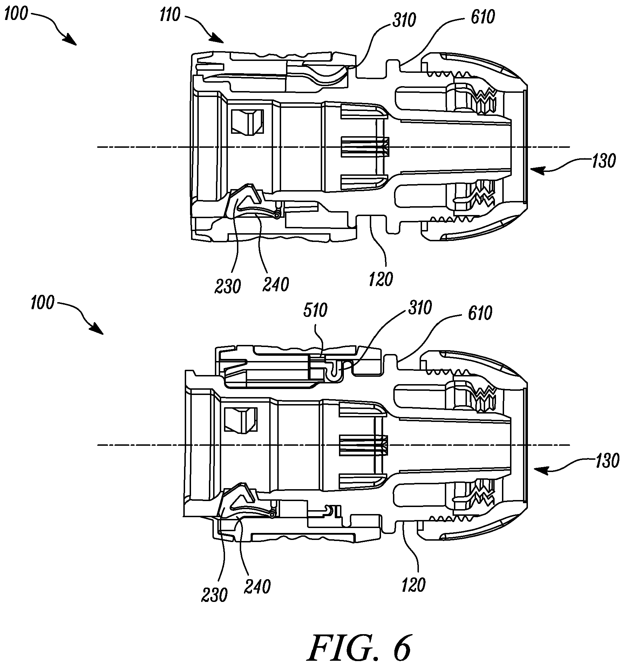

**FIG. 6** illustrates two configurations of the hose coupling **100** when the coupling sleeve **110** is in the engaged and in the disengaged position, respectively. In the engaged position shown by the top figure, the coupling sleeve **110** can be moved towards an end **610** of the base body **120**. The elastomeric element **310** has a C-shaped deformation leading to a slight preload force on the base body **250**. In the disengaged position shown by the bottom figure, the coupling sleeve **110** abuts the end **610** of the base body **120** and thus the elastomeric element **310** undergoes a S-shaped deformation associated with a high restoring force on the base body **250**. Moreover, in the disengaged position at least part of the locking element (**230**) is able to move its positional relation to the slot (**240**)defined in the base body **120**. Moreover, the C, and S-shaped deformation are mere illustrative and will depend on many factors relating to the coupling sleeve **110**, and the base body **120**, such as the annular space between them among other implementations factors.

According to an embodiment of the present invention, the auxiliary element **220** and the at least one elastomeric element **310** are coupled via a channel **510** within the coupling sleeve **110** and are thus manufactured in a single processing step. Role of the elastomeric element **310** is crucial for a safe and risk-free operation of the connector assembly, and their number/material/dimensions will also generally depend on such safety factors among others. Moreover, the present disclosure allows that a hose connector, not shown since any general hose connector may include the coupling sleeve **110** which has the elastomeric element(s) **310** to benefit from the various advantages evident from different embodiments of the present disclosure.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- 100': Conventional Hose Coupling
- 100: Hose Coupling
- 110: Coupling Sleeve
- 120: Base Body
- 130: Nut
- 210: Biasing Member
- 220: Auxiliary Element
- 226: Water Outlet
- 230: Locking Element
- 240: Slot
- 250: Base Body
- 310: Elastomeric Element
- 510: Channel
- 610: End

## Claims

1. A coupling sleeve (**110**) for a quick-acting hose coupling (**100**) having a base body (**120**), whereby
the coupling sleeve (**120**) is adapted to be fixed onto the base body (**120**), with the base body having at least one opening defining a slot (**240**) through which at least part of a locking element (**230**) is able to pass,
the coupling sleeve (**110**) is adapted to move between an engaged position and a disengaged position relative to the base body (**120**) of the hose coupling (**100**),
in the engaged position the locking element (**230**) is held in a position where at least part of it is passed through the slot (**240**) defined by the base body (**120**); and
in the disengaged position at least part of the locking element (**230**) moves its positional relation to the slot (**240**);
whereby the coupling sleeve (**110**) further includes at least one elastomeric, rubber like element (**310**) adapted to bias the coupling sleeve (**110**) in the engaged position
**characterized in that:**
the coupling sleeve (10) is configured such that in the engaged position of the coupling sleeve (**110**) the elastomeric, rubber like element (**310**) has a C-shaped deformation, and
in the disengaged position of the coupling sleeve (**110**) the elastomeric, rubber like element (**310**) has an S-shaped deformation.

2. The coupling sleeve (**110**) of claim **1**, wherein the at least one elastomeric element (**310**) is manufactured using a 2-component (2K) injection molding process.

3. The coupling sleeve (**110**) of claims **1** or **2**, wherein the coupling sleeve (**110**) exhibits a base body (**250**) of a relatively hard plastics material and an auxiliary element (**220**) of a flexible elastomeric, rubber-like material.

4. The coupling sleeve (**110**) of claim **3**, wherein the auxiliary element (**220**) is on the outer side of the coupling sleeve (**110**) and the at least one elastomeric element (**310**) is on the inner side of the coupling sleeve (**110**).

5. The coupling sleeve (**110**) of claim **4**, wherein the auxiliary element (**220**) and the at least one elastomeric element (**310**) are manufactured using a 2-component or multi-component injection molding process.

6. The coupling sleeve (**110**) of claims **4** or **5**, wherein the auxiliary element (**220**) and the at least one elastomeric element (**310**) are coupled via a channel (**510**) within the coupling sleeve (**110**) and are thus manufactured in a single processing step.

7. A hose connector, comprising a coupling sleeve (**110**) of any one of the preceding claims.

## Patentansprüche

1. Kupplungsmuffe (110) für eine Schnellverschlussschlauchkupplung (100) mit einem Hauptkörper (120), wobei
die Kupplungsmuffe (110) dazu ausgebildet ist, an dem Hauptkörper (120) befestigt zu werden, wobei der Hauptkörper mindestens eine Öffnung aufweist, die eine Nut (240) definiert, durch die mindestens ein Teil eines Verschlusselements (230) hindurchtreten kann,
die Kupplungsmuffe (110) dazu ausgebildet ist, sich zwischen einer Verriegelungsposition und einer Entriegelungsposition relativ zu dem Hauptkörper (120) der Schnellverschlussschlauchkupplung (100) zu bewegen,
in der Verriegelungsposition das Verschlusselement (230) in einer Position gehalten wird, in der zumindest ein Teil davon durch die von dem Hauptkörper (120) definierte Nut (240) geführt wird; und
in der Entriegelungsposition zumindest ein Teil des Verschlusselements (230) seine Lagebeziehung zu der Nut (240) verschiebt;
wobei die Kupplungsmuffe (110) ferner mindestens ein gummiartiges Elastomerelement (310) aufweist, das geeignet ist, die Kupplungsmuffe (110) in der Verriegelungsposition vorzuspannen
**dadurch gekennzeichnet, dass**:
die Kupplungsmuffe (110) derart ausgebildet ist, dass in der Verriegelungsposition der Kupplungsmuffe (110) das gummiartige Elastomerelement (310) eine C-förmige Verformung aufweist, und
in der Entriegelungsposition der Kupplungsmuffe (110) das gummiartige Elastomerelement (310) eine S-förmige Verformung aufweist.

2. Kupplungsmuffe (110) nach Anspruch 1, wobei das mindestens eine Elastomerelement (310) in einem 2-Komponenten (2K)-Spritzgussverfahren hergestellt wird.

3. Kupplungsmuffe (110) nach Anspruch 1 oder 2, wobei die Kupplungsmuffe (110) einen Hauptkörper (250) aus einem relativ harten Kunststoff und ein Hilfselement (220) aus einem flexiblen elastomeren, gummiartigen Material aufweist.

4. Kupplungsmuffe (110) nach Anspruch 3, wobei das Hilfselement (220) auf der Außenseite der Kupplungsmuffe (110) und das mindestens eine Elastomerelement (310) auf der Innenseite der Kupplungsmuffe (110) angeordnet ist.

5. Kupplungsmuffe (110) nach Anspruch 4, wobei das Hilfselement (220) und das mindestens eine Elastomerelement (310) im Zwei- oder Mehrkomponentenspritzgussverfahren hergestellt sind.

6. Kupplungsmuffe (110) nach Anspruch 4 oder 5, wobei das Hilfselement (220) und das mindestens eine Elastomerelement (310) über einen Kanal (510) innerhalb der Kupplungsmuffe (110) gekoppelt sind und somit in einem einzigen Bearbeitungsschritt hergestellt werden.

7. Schlauchverbinder, umfassend eine Kupplungsmuffe (110) nach einem der vorhergehenden Ansprüche.

## Revendications

1. Manchon d'accouplement (110) pour un raccord de tuyau à action rapide (100) ayant un corps de base (120), dans lequel
le manchon d'accouplement (120) est adapté pour être fixé sur le corps de base (120), le corps de base ayant au moins une ouverture définissant une fente (240) à travers laquelle au moins une partie d'un élément de verrouillage (230) peut passer,
le manchon d'accouplement (110) est adapté pour se déplacer entre une position engagée et une position désengagée par rapport au corps de base (120) du raccord de tuyau (100), dans la position engagée, l'élément de verrouillage (230) est maintenu dans une position où au moins une partie de celui-ci est passée à travers la fente (240) définie par le corps de base (120) ; et
dans la position désengagée, au moins une partie de l'élément de verrouillage (230) déplace sa relation positionnelle par rapport à la fente (240) ;
dans lequel le manchon d'accouplement (110) comprend en outre au moins un élément élastomère (310) semblable à du caoutchouc, adapté pour solliciter le manchon d'accouplement (110) dans la position engagée
**caractérisé en ce que** :
le manchon d'accouplement (10) est configuré de telle sorte que dans la position engagée du manchon d'accouplement (110), l'élément élastomère, semblable à du caoutchouc (310) a une déformation en forme de C, et
dans la position désengagée du manchon d'accouplement (110), l'élément élastomère, semblable à du caoutchouc (310) a une déformation en forme de S.

2. Manchon d'accouplement (110) selon la revendication 1, dans lequel l'au moins un élément élastomère (310) est fabriqué en utilisant un procédé de moulage par injection à 2 composants (2K).

3. Manchon d'accouplement (110) selon la revendication 1 ou 2, dans lequel le manchon d'accouplement (110) présente un corps de base (250) en matière plastique relativement dure et un élément auxiliaire (220) en matière flexible élastomère de type caoutchouc.

4. Manchon d'accouplement (110) selon la revendication 3, dans lequel l'élément auxiliaire (220) se trouve sur le côté extérieur du manchon d'accouplement (110) et l'au moins un élément élastomère (310) se trouve sur le côté intérieur du manchon d'accouplement (110).

5. Manchon d'accouplement (110) selon la revendication 4, dans lequel l'élément auxiliaire (220) et l'au moins un élément élastomère (310) sont fabriqués en utilisant un procédé de moulage par injection à deux composants ou à plusieurs composants.

6. Manchon d'accouplement (110) selon les revendications 4 ou 5, dans lequel l'élément auxiliaire (220) et l'au moins un élément élastomère (310) sont couplés via un canal (510) à l'intérieur du manchon d'accouplement (110) et sont ainsi fabriqués en une seule étape de traitement.

7. Raccord de tuyau, comprenant un manchon d'accouplement (110) selon l'une quelconque des revendications précédentes.
